# EUROPEAN PATENT SPECIFICATION

(11) **EP 2 326 149 B1**
(45) Date of publication and mention of the grant of the patent: **05.09.2018**
(21) Application number: 10176918.0
(22) Date of filing: 15.09.2010
(51) Int. Cl.: H05B 41/282, H05B 41/288, H05B 41/38

(54) **Discharge lamp lighting device and illumination fixture**
Beleuchtungsvorrichtung für eine Entladelampe und Beleuchtungsbefestigung
Dispositif d'éclairage par lampe à décharge et accessoire d'illumination

(30) Priority: 25.09.2009 JP 2009221593
(43) Date of publication of application: 25.05.2011
(73) Proprietor: Panasonic Intellectual Property Management Co., Ltd., Osaka-shi, Osaka 540-6207 (JP)
(72) Inventor: Kamagai, Jun, Suita Osaka (JP); Ukita, Nobuo, Himeji Hyogo (JP); Harada, Kazuhiko, Himeji Hyogo (JP); Komatu, Naoki, Kobe Hyogo (JP)
(74) Representative: Rüger, Barthelt & Abel

(56) References cited:
- EP-A1- 2 079 285
- DE-A1- 4 412 518
- US-A1- 2002 140 370
- US-A1- 2002 190 665

## Description

### [Field of the Invention]

The present invention relates to a discharge lamp lighting device and an illumination fixture.

### [Background Art]

Conventionally, such a discharge lamp lighting device lighting such a HID lamp utilizing arc discharge in high-voltage metal vapor has been provided (see Patent Document 1, for example).

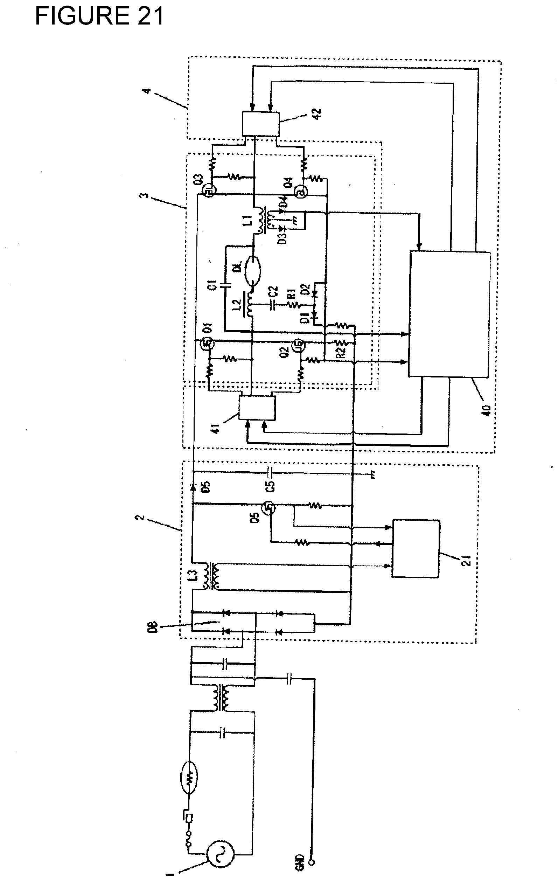

As a discharge lamp lighting device of this type, for example, there is one shown in Fig. 21. The discharge lamp lighting device is provided with a DC power source part 2 which converts AC power inputted from an AC power source 1 to DC power with a predetermined voltage to output the same, a lighting part 3 which converts the DC power outputted from the DC power source part 2 to AC power to output the same to a discharge lamp DL, and a control part 4 which controls the lighting part 3.

In detailed explanation, the DC power source part 2 is provided with a diode bridge DB, the diode bridge DB being connected to an AC power source via a proper fuse or filter and a DC output end on a low voltage side thereof being connected to the ground, a series circuit of an inductor L3 and a switching element Q5, the series circuit being connected between DC output ends of the diode bridge DB, and a series circuit of a diode D5 and an output capacitor C5, the series circuit being connected in parallel with the switching element Q5, and the DC power part 2 outputs a voltage between both the ends of the output capacitor C5 as an output voltage. That is, the DC power source part 2 includes a well-known boost converter (a set-up chopper circuit) connected between output ends of the diode bridge DB. Further, the DC power source part 2 is provided with a power source drive circuit 21 for ON/OFF-driving the switching element Q5 periodically at such an on-duty as to keep the voltage between both the ends of the output capacitor C5 (namely, the output voltage of the DC power source part 2) constant.

The lighting part 3 is a so-called full-bridge type inverter circuit, and includes two sets of series circuits, each set being connected between the output ends of the DC power source part 2 and including two of switching elements Q1 to Q4. Each of the switching elements Q1 to Q4 in the lighting part 3 is, for example, a MOSFET including a parasitic diode (a body diode), and is connected such that a forward direction of the parasitic diode is a direction opposite to the output of the DC power source part 2. Two switching elements Q2 and Q4 on a low voltage side of the switching elements Q1 to Q4 are each connected to an output end on the low voltage side of the DC power source part 2 via a detection resistor R2. The discharge lamp DL is composed of an HID lamp also called "high-pressure discharge lamp", one end of the discharge lamp DL being connected to a connection point of the switching elements Q3 and Q4 of one of the series circuits (the switching element Q3 on the high voltage side of these switching elements Q3 and Q4 is hereinafter called "third switching element Q3", while the switching element Q4 on the low voltage side thereof is hereinafter called "fourth switching element Q4") via a first inductor L1 and the other thereof being connected to a connection point of the switching elements Q1 and Q2 of the other of the series circuits (the switching element Q1 on the high voltage side of these switching elements Q1 and Q2 is hereinafter called "first switching element Q1", while the switching element Q2 on the low voltage side thereof is hereinafter called "second switching element Q2") via a second inductor L2. Further, a first capacitor C1 is connected in parallel with the series circuit of the second inductor L2 and the discharge lamp DL in order to reduce ripple. Furthermore, a connection point of the switching elements Q2 and Q4 on the low voltage side and the detection resistor R2 is connected to the ground via a series circuit of two diodes D1 and D2, the cathode of each of the diodes being directed toward the ground, and a resistor. These diodes D1 and D2 are for causing resonance current flowing in a resonance circuit configured by a second capacitor C2 and the second inductor L2 to bypass the detection resistor R2 such that the resonance current does not flow in the detection resistor R2. Further, the second inductor L2 is provided with a tap to configure an auto transformer, and the tap is connected to a connection point of the two diodes D1 and D2 via a series circuit of the second capacitor C2 and the resistor R1.

The control part 4 is provided with drive circuits 41 and 42 which ON/OFF-drive the respective switching elements Q1 to Q4 in the lighting part 3, and an integrated circuit for control 40 which controls the drive circuits 41 and 42. Since such a control part 4 can be realized utilizing a well-known technique, detailed illustration and explanation are omitted.

The integrated circuit for control 40 is connected to a connection point of the detection resistor R2 and the switching elements Q2 and Q4, and a connection point of the second inductor L2 and the switching elements Q1 and Q2. That is, the integrated circuit for control 40 detects output current (hereinafter, called "lamp current") from the lighting part 3 to the discharge lamp DL based upon a voltage between both the ends of the detection resistor R2 and detects an output voltage (hereinafter, called "lamp voltage") from the lighting part 3 to the discharge lamp DL based upon a potential of a connection point of the second inductor L2 and the switching elements Q1 and Q2 to the ground. Further, the first inductor L1 is provided with a secondary winding having a tap connected to the ground, both ends of the secondary winding are connected to the integrated circuit for control 40 via diodes D3 and D4, respectively.

An operation of the abovementioned discharge lamp lighting device will be explained below. When power is turned on, the control part 4 performs a starting operation for causing the lighting part 3 to output high voltage required for start of discharge in the discharge lamp DL to the discharge lamp DL. Specifically, the respective switching elements Q1 to Q4 in the lighting part 3 are ON/OFF-driven periodically such that ones of the switching elements Q1 to Q4 positioned diagonally to each other are simultaneously turned on and ones therein connected serially to each other are alternately turned on. The frequency for ON/OFF-driving is set to a resonance frequency (for example, 120 kHz which is a secondary resonance frequency of one third of a reference resonance frequency 360 kHz) of the resonance circuit configured by the second inductor L2 and the second capacitor C2. During the starting operation, a resonance voltage generated at a connection point of the second inductor L2 and the second capacitor C2 is boosted at the second inductor L2 serving as the auto transformer to be outputted to the discharge lamp DL, thereby discharge (namely, lighting) in the discharge lamp DL is started. When the discharge lamp DL starts to light, current starts to flow in the discharge lamp DL, so that the control part 4 detects the lighting of the discharge lamp DL based upon current inducted by the secondary winding in the first inductor L1 to flow in the discharge lamp DL via the diodes D3 and D4, and the operation of the discharge lamp DL proceeds to the next electrode heating operation.

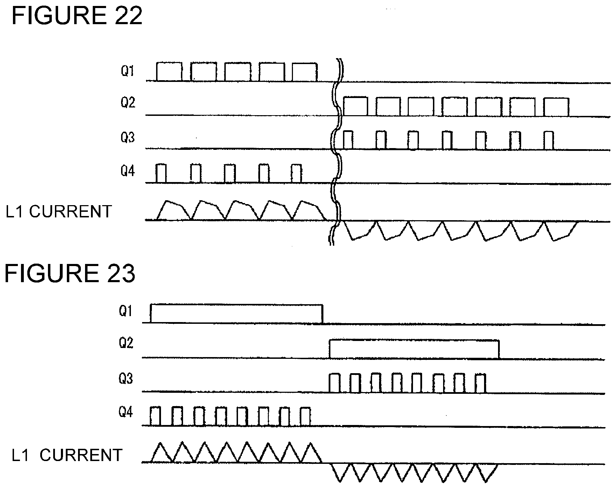

The electrode heating operation will be explained referring to Fig. 22. Incidentally, in Fig. 22, a horizontal axis indicates time, each of graphs of Q1 to Q4 indicating a term of turning-on of the switching element attached with a corresponding symbol, and a direction of current flowing in the first inductor L1 from the side of the discharge lamp DL (that is, a right direction in FIG. 21) being defined as positive (a polarity plotted on an upper side from a horizontal line indicating zero in Fig. 22). The same holds true to figures described below. In the electrode heating operation, as shown in Fig. 22, the control part 4 first turns on respective switching elements (for example, the first switching element Q1 and the fourth switching element Q4) in one set of the sets of the switching elements Q1 to Q4 positioned diagonally to each other and turns off the respective switching elements (for example, the second switching element Q2 and the third switching element Q3) in the other set, respectively. Thereby, current (hereinafter, called "circuit current") flowing in the first inductor L1 gradually increases, so that energies are accumulated in the respective inductors L1 and L2, respectively. When the circuit current has reached a predetermined value, the control part 4 turns off one switching element (for example, the fourth switching element Q4) in the set which has been turned on. Thereafter, at a timing at which a predetermined time has elapsed, the control part 4 turns off the other switching element (for example, the switching element Q1). During a period where at least three of the switching elements Q1 to Q4 have been turned off, the circuit current flows in a loop composed of the parasitic diodes of the switching elements Q1 and Q4 which are in on states until just before and the output capacitor C5 in the DC power source part 2 due to discharge of energies from the respective inductors L1 and L2 but it gradually decreases. When the circuit current has reached zero, the control part 4 turns on the respective switching elements Q1 and Q4 in the one set, and it repeats similar operation by a predetermined number of times. Thereafter, as shown by the right half in FIG. 22, switch between the set to be maintained in an off state in sets composed of the switching elements Q1 to Q4 and the set to be ON/OFF-controlled is performed. In the above example, the first switching element Q1 and the fourth switching element Q4 are maintained in off states, respectively, while ON/OFF-controlling the second switching element Q2 and the third switching element Q3 such as described above is started. Thereby, the polarity of the circuit current is inverted and similar ON/OFF-control is repeated by a predetermined number of times. Thereafter, by switching the set of the sets composed of the switching elements Q1 to Q4 to be ON/OFF-controlled to the other set again, the polarity of the circuit current is inverted, and similar operation is repeated thereafter. The inversion of the polarity of the circuit current is performed at a frequency of 100 Hz to 200 Hz.

When the lamp voltage has reached a predetermined voltage during the electrode heating operation, the control part 4 makes a transition to a stable lighting operation for maintaining lighting of the discharge lamp DL. In the stable lighting operation, as shown in Fig. 23, the control part 4 first turns on respective switching elements (for example, the first switching element Q1 and the fourth switching element Q4) in one set of the sets of the switching elements Q1 to Q4 positioned diagonally to each other and turns off the respective switching elements (for example, the second switching element Q2 and the third switching element Q3) in the other set, respectively. Thereby, the circuit current gradually increases, so that energies are accumulated in the respective inductors L1 and L2, respectively. When the circuit current has reached a predetermined value, the control part 4 turns off one switching element (for example, the fourth switching element Q4) in the set which has been turned on. Thereby, the circuit current flows in a loop composed of the parasitic diodes of the switching elements Q1 and Q4 which are in on states until just before and the output capacitor C5 in the DC power source part 2 due to discharge of energies from the respective inductors L1 and L2 but it gradually decreases. When the circuit current has reached zero, the control part 4 turns on the one switching element (the fourth switching element Q4 in the above example) and it repeats similar operation by a predetermined number of times. Thereafter, as shown by the right half in FIG. 23, switch between the set to be maintained in the off state in sets composed of the switching elements Q1 to Q4 and the set which may be ON-controlled is performed. In the above example, the first switching element Q1 and the fourth switching element Q4 are maintained in the off state, respectively, while ON/FF-controlling the second switching element Q2 and the third switching element Q3 such as described above is started. Thereby, the polarity of the circuit current is inverted and similar ON/OFF-control is repeated by a predetermined number of times. Thereafter, by switching one set of the sets composed of the switching elements Q1 to Q4 to be ON/OFF-controlled to the other set again, the polarity of the circuit current is inverted, and similar operation is repeated thereafter. The inversion of the polarity of the circuit current is performed at a frequency of 100 Hz to 200 Hz.

### [Conventional Technique Document]

### [Patent Document]

[Patent Document 1] Japanese Patent No. 4240998

### [Disclosure of the Invention]

### [Problems to be solved by the Invention]

In the abovementioned discharge lamp lighting device, the frequency of the output to the discharge lamp DL during the starting operation is set to be very high as compared with the frequency thereof during the electrode heating operation or the stable lighting operation performed thereafter. Accordingly, even if the discharge lamp DL during the starting operation starts to light, current flows in the first capacitor C1 connected in parallel with the discharge lamp DL, so that going-out of the discharge lamp DL easily occurs due to lack of lamp current required for maintaining discharging in the discharge lamp DL.

US 2002/0190665 A1 discloses a discharge lamp lighting device comprising the features of the preamble of independent claim 1. In a starting mode of operation, in order to ignite the discharge lamp, the control part controls the lighting part so as to periodically and alternately turn on and off one pair of switches which are positioned on one diagonal of a full bridge circuit of the lighting part and another pair of switches which are positioned on another diagonal of the full bridge circuit of the lighting part. The one switch pair has a longer duty cycle than the other switch pair, thereby generating a DC component in an output voltage to the discharge lamp during the starting operation to assist a glow-to-arc transition.

Further circuit arrangements and controls for igniting discharge lamps, such as high intensity discharge lamps, are disclosed in US 2002/0140370 A1 and DE 44 12 518 A1.

EP 2 079 285 A1 discloses an illumination fixture comprising a discharge lamp lighting device and a fixture main body holding a discharge lamp lit by the discharge lamp lighting device and the discharge lamp lighting device.

The present invention has been made in view of these circumstances and an object thereof is to provide a discharge lamp lighting device and an illumination fixture which is hard to go out at a starting time.

This object is solved by the discharge lamp lighting device having the features of independent claim 1 and by the illumination fixture according to independent claim 12. Preferred embodiments of present invention are subject-matter of dependent claims.

### [Means adapted to solve the Problems]

According to a first aspect of the present invention, there is provided a discharge lamp lighting device provided with a lighting part including at least a capacitor connected in parallel with a discharge lamp and a resonance circuit connected to the discharge lamp and outputting AC power to the discharge lamp, and a control part controlling the lighting part, wherein the control part is for, upon start of lighting of the discharge lamp, continuing a starting operation for controlling the lighting part for a predetermined time so as to make the frequency of an output of the lighting part sufficiently close to the resonance frequency of the resonance circuit included in the lighting part to such an extent that a voltage required for starting of discharge in the discharge lamp is outputted to the discharge lamp and the control part controls the lighting part so as to generate a DC component in an output voltage to the discharge lamp during the starting operation.

According to the invention, since output current to the discharge lamp is secured by the DC component generated in the output voltage to the discharge lamp, going-out after lighting start of the discharge lamp is hard to occur in the starting operation as compared with the case that the DC component is not generated in the output voltage to the discharge lamp.

According to a second aspect of the invention, there is provided the discharge lamp lighting device according to the first aspect, wherein the lighting part is composed of a full-bridge type inverter circuit inputted with DC power to output AC power, and the control part makes control of one set of sets of switching elements, each set being composed of switching elements positioned diagonally to each other in the lighting part, asymmetric to control of the other set during the starting operation, thereby generating the DC component in the output voltage to the discharge lamp.

According to a third aspect of the invention, there is provided the discharge lamp lighting device according to the second aspect, wherein, in the lighting part, the respective switching elements have parasitic diodes opposed to DC power to be inputted, and the control part controls the lighting part in the starting operation so as to periodically and alternately repeat a state of turning on the switching elements in one set of sets of switching elements, respectively, each set being composed of switching elements positioned diagonally to each other in the lighting part, and turning off the switching elements in the other set, respectively, and a state of turning on only one of the switching elements in the other set and turning off the remaining three switching elements, respectively.

According to a fourth aspect of the invention, there is provided the discharge lamp lighting device according to the second aspect, wherein, in the lighting part, the respective switching elements have parasitic diodes opposed to DC power to be inputted, and the control part controls the lighting part in the starting operation so as to periodically and cyclically repeat a state of turning on the switching elements in one set of sets of switching elements, respectively, each set being composed of switching elements positioned diagonally to each other in the lighting part, and turning off the switching elements in the other set, respectively, a state of turning on only one of the switching elements in the one set and turning off the remaining three switching elements, respectively, and a state of turning on only one of the switching elements in the other set and turning off the remaining three switching elements, respectively.

According to a fifth aspect of the invention, there is provided the discharge lamp lighting devices according to the first to fourth aspects, wherein the control part gradually changes the frequency of the operation of the lighting part within a predetermined sweep frequency range including the resonance frequency of the resonance circuit included in the lighting part in the starting operation.

According to the present invention, it becomes possible to output, to the discharge lamp, a high voltage enough to start lighting of the discharge lamp during the starting operation reliably without influenced by variations of circuit parts.

According to a sixth aspect of the invention, there is provided the discharge lamp lighting device according to the fifth aspect, wherein the control part gradually decreases the frequency of the operation of the lighting part from an upper limit frequency of the sweep frequency range to a lower limit frequency thereof in the starting operation.

According to a seventh aspect of the invention, there is provided the discharge lamp lighting device according to the sixth aspect, wherein the control part is for periodically performing change of the frequency of the operation of the lighting part plural times in the starting operation, and the control part changes the frequency of the operation of the lighting part to a frequency lower than the upper limit frequency of the sweep frequency range and higher than the lower limit frequency of the sweep frequency range for a predetermined time before changing the frequency of the operation of the lighting part to the upper limit frequency of the sweep frequency range after changing the frequency of the operation of the lighting part to the lower limit frequency of the sweep frequency range.

According to the present invention, going-out of the discharge lamp is hard to occur as compared with the case of changing the frequency of the operation of the lighting part to the upper limit frequency of the sweep frequency range just after changing the frequency of the operation of the lighting part to the lower limit frequency of the sweep frequency range.

According to an eighth aspect of the invention, there is provided the discharge lamp lighting device according to any one of the first to seventh aspects, wherein the control part controls the lighting part so as to invert the polarity of the DC component of the output voltage to the discharge lamp at least once during the starting operation.

According to the present invention, non-lighting due to insufficient heating of one of electrodes in the discharge lamp or life shortening of the discharge lamp due to intensive wear of only one of electrodes in the discharge lamp can be suppressed as compared with the case that the polarity of the DC component in the output voltage to the discharge lamp is not inverted.

According to a ninth aspect of the invention, there is provided the discharge lamp lighting device according to the third aspect or the fourth aspect, wherein the control part performs switching at least once during the starting operation regarding which one of sets of switching elements, each set being composed of switching elements positioned diagonally to each other in the lighting part, should be defined as the one set, and controls the lighting part so as to perform a transient operation for gradually lowering a voltage between both the ends of the capacitor connected in parallel with the discharge lamp for a predetermined time at the time of the switching.

According to this invention, a peak of current due to rapid discharge from the capacitor connected in parallel with the discharge lamp at an inversion time of the polarity of the DC component in the output voltage to the discharge lamp caused by the switch of control can be suppressed as compared with the case that the transient operation is not performed.

According to a tenth aspect of the invention, there is provided the discharge lamp lighting device according to the ninth aspect, wherein the transient operation is an operation where the one set of the sets of switching elements, each set being composed of switching elements positioned diagonally to each other in the lighting part, and the other set are alternately and periodically turned on and on-duty of the respective switching elements in a set defined as the one set until just before is made higher than that of the respective switching elements in a set defined as the other set until just before.

According to an eleventh aspect of the invention, there is provided the discharge lamp lighting device according to the ninth aspect, wherein the transient operation is an operation of periodically and cyclically repeating a state of turning on the respective switching elements in a set defined as the one set until just before, respectively, and turning off the respective switching elements in a set defined as the other set until just before, respectively, a state of turning on the respective switching elements in a set defined as the other set until just before, respectively, and turning off the respective switching elements in a set defined as the one set until just before, respectively, and a state of turning on one of the switching elements in a set defined as the other set until just before and turning off the remaining three switching elements, respectively.

According to twelfth aspect of the present invention, there is provided the discharge lamp lighting device according to the ninth aspect, wherein the transient operation is an operation of turning off the respective switching elements in a set defined as the one set until just before, respectively, and of, in an on state of one of the switching elements in a set defined as the other set until just before, periodically turning on and off the other of the switching elements in a set defined as the other set until just before.

According to the thirteenth aspect, there is provided the discharge lamp lighting device according to the eighth aspect, wherein the lighting part includes spike superimposing means adapted to superimpose a spike-like component on output current to the discharge lamp after lighting of the discharge lamp.

According to the fourteenth aspect, there is provided an illumination fixture provided with the discharge lamp lighting device described in one of the first to thirteenth aspects and a fixture main body holding a discharge lamp lit by the discharge lamp lighting device and the discharge lamp lighting device, respectively.

### [Effect of the Invention]

According to the first aspect of the present invention, since the discharge lamp lighting device is provided with the lighting part at least including the capacitor connected in parallel with the discharge lamp and the resonance circuit connected to the discharge lamp to output AC power to the discharge lamp, and the control part controlling the lighting part, wherein the control part is for, upon start of lighting of the discharge lamp, continuing a starting operation for controlling the lighting part for a predetermined time so as to make the frequency of an output of the lighting part sufficiently close to the resonance frequency of the resonance circuit included in the lighting part to such an extent that a voltage required for starting of discharge in the discharge lamp is outputted to the discharge lamp, and the control part controls the lighting part so as to generate a DC component in an output voltage to the discharge lamp during the starting operation, the output current to the discharge lamp is ensured by a DC component generated in the output voltage to the discharge lamp, so that the discharge lamp is hard to go out after start of lighting of the discharge lamp in the starting operation as compared with the case that DC component is not generated in the output voltage to the discharge lamp.

According to the fifth aspect of the present invention, since the control part gradually changes the frequency of the operation of the lighting part within the predetermined sweep frequency range including the resonance frequency of the resonance circuit included in the lighting part in the starting operation, it becomes possible to output, to the discharge lamp, a high voltage enough to start lighting of the discharge lamp during the starting operation reliably without being influenced by variations of circuit parts.

According to the seventh aspect of the present invention, since the control part is for periodically conducting change of the frequency of the operation of the lighting part plural times in the starting operation, and the control part changes the frequency of the operation of the lighting part to a frequency lower than the upper limit frequency of the sweep frequency range and higher than the lower limit frequency of the sweep frequency range before changing the frequency of the operation of the lighting part to the upper limit frequency of the sweep frequency range after changing the frequency of the operation of the lighting part to the lower limit frequency of the sweep frequency range, the discharge lamp is hard to go out as compared with the case that the frequency of the operation of the lighting part is changed to the upper limit frequency of the sweep frequency range just after it has been changed to the lower limit frequency of the sweep frequency range.

According to the eighth aspect of the present invention, since the control part controls the lighting part so as to invert the polarity of the output voltage to the discharge lamp at least once during the starting operation, non-lighting of the discharge lamp due to insufficient heating of one of electrodes in the discharge lamp or life shortening due to intensive wear of only one of electrodes in the discharge lamp can be suppressed as compared with the case that the polarity of the DC component in the output voltage to the discharge lamp is not inverted.

According to the ninth aspect of the present invention, since the peak of the current due to rapid discharge from the capacitor connected in parallel with the discharge lamp at the reversion time of the polarity of the DC component in the output voltage to the discharge lamp caused by the switching of control can be suppressed as compared with the case that the transient operation is not performed.

### [Brief Description of the Drawings]

[Fig.1] Fig.1 is an explanatory diagram showing time changes of on and off states of respective switching elements in a lighting part, a lamp voltage, and a lamp current in a first embodiment of the present invention.
[Fig.2] Fig.2 is an explanatory diagram showing time changes of the on and off states of the respective switching elements in the lighting part and current flowing in a first inductor in the first embodiment of the present invention.
[Fig. 3] Fig. 3 is an explanatory diagram showing an operation when lighting of the discharge lamp has not been determined in the first embodiment of the present invention.
[Fig. 4] Fig. 4 is an explanatory diagram showing one example of a relationship between an effective value of a lamp voltage and lamp power.
[Fig. 5] Fig. 5 is an explanatory diagram showing time changes of on and off states of respective switching elements in a lighting part, a lamp voltage, and a lamp current in a second embodiment of the present invention.
[Fig. 6] Fig. 6 is an explanatory diagram showing time change of the on and off states of the respective switching elements in the lighting part and current flowing in a first inductor in the second embodiment of the present invention.
[Fig. 7] Fig. 7 is an explanatory diagram showing a simulation result of change of a lamp current during a sweep operation for gradually reducing an operation frequency from 140 kHz to 70 Hz in each of the second embodiment and the first embodiment.
[Fig. 8] Fig. 8 is an explanatory diagram showing time changes of on and off states of respective switching elements in a lighting part, a lamp voltage, and a lamp current in a third embodiment of the present invention.
[Fig. 9] Fig. 9 is an explanatory diagram showing an example of waveforms of an input voltage to the gate of a first switching element, an input voltage to the gate of a third switching element, and a lamp voltage in the third embodiment of the present invention.
[Fig. 10] Fig. 10 is an enlarged explanatory diagram of a main portion of the waveforms in Fig. 9.
[Fig. 11] Fig. 11 is an enlarged explanatory diagram of a main portion of the waveforms in Fig. 10.
[Fig. 12] Fig. 12 is an explanatory diagram showing an example of waveforms of the lamp voltage and the lamp current in the third embodiment of the present invention.
[Figs. 13] Fig. 13A is an explanatory diagram showing a waveform obtained by removing spike-like components from the lamp current shown in Fig. 12 and Fig. 13B is an enlarged explanatory diagram of a main portion in Fig. 13A.
[Fig. 14] Fig. 14 is an explanatory diagram showing an example of a relationship between a lamp voltage and a lamp current during a starting operation in the third embodiment of the present invention.
[Fig. 15] Fig. 15 is an explanatory diagram showing time changes of on and off states of respective switching elements in a lighting part and a lamp current in a starting operation in a fourth embodiment of the present invention.
[Fig. 16] Fig. 16 is an explanatory diagram showing time changes of on and off states of respective switching elements in a lighting part and a lamp current in a starting operation in a modified embodiment of the fourth embodiment of the present invention.
[Fig. 17] Fig. 17 is an explanatory diagram showing time changes of on and off states of respective switching elements in a lighting part and a lamp current in a starting operation in another modified embodiment of the fourth embodiment of the present invention.
[Fig. 18] Fig. 18 is a perspective view showing one example of an illumination fixture using the fourth embodiment of the present invention.
[Fig. 19] Fig. 19 is a perspective view showing another example of an illumination fixture using the fourth embodiment of the present invention.
[Fig. 20] Fig. 20 is a perspective view showing still another example of an illumination fixture using the fourth embodiment of the present invention.
[Fig. 21] Fig. 21 is a circuit block diagram showing one example of a discharge lamp lighting device.
[Fig. 22] Fig. 22 is an explanatory diagram showing time changes of on and off states of respective switching elements in the lighting part and current flowing in a first inductor in an electrode heating operation of the discharge lamp lighting device.
[Fig. 23] Fig. 23 is an explanatory diagram showing time changes of on and off states of the respective switching elements in the lighting part and current flowing in the first inductor in a stable lighting operation of the discharge lamp lighting device.

### [Best Mode for Carrying Out the Invention]

Best modes for carrying out the present invention will be explained below referring to the drawing.

### (First Embodiment)

Since a basic configuration of a first embodiment is common to that of the conventional example explained referring to Fig. 21, explanation about common portions is omitted.

The present embodiment is different in content of a starting operation from the convention example explained referring to Figs. 21 to 23.

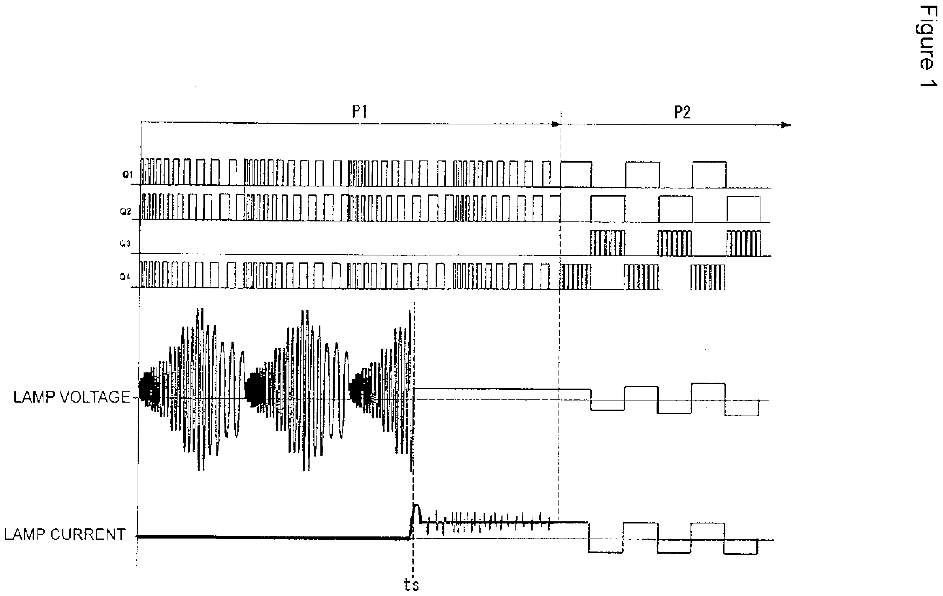

Specifically explaining, in the present embodiment, as shown in Fig. 1, by alternately performing switching between a first state where respective switching elements (a first switching element Q1 and a fourth switching element Q4 in Fig. 1) in one set of sets composed of switching elements positioned diagonally to each other are turned ON while respective switching elements (a second switching element Q2 and a third switching element Q4 in Fig. 1) in the other set are turned off and a second state where one switching element (the second switching element Q2 in Fig. 1) in the other set is turned on while the remaining switching elements are turned off, namely, maintaining one (a third switching element Q3 in Fig. 1) of the switching elements in a lighting part 3 in an off state, a DC component is generated in an output voltage (namely, a voltage between both the ends of a discharge lamp DL, which is hereinafter called "lamp voltage") of the lighting part 3 in a starting operation P1. In the present embodiment, on-duties of the respective switching elements Q1, Q2, and Q4 ON/OFF-driven are set at about 50%, respectively. Incidentally, in Fig. 1, the lamp voltage and the lamp current are set such that right directions thereof in Fig. 21 are positive, respectively. The same holds true to figures hereinafter shown.

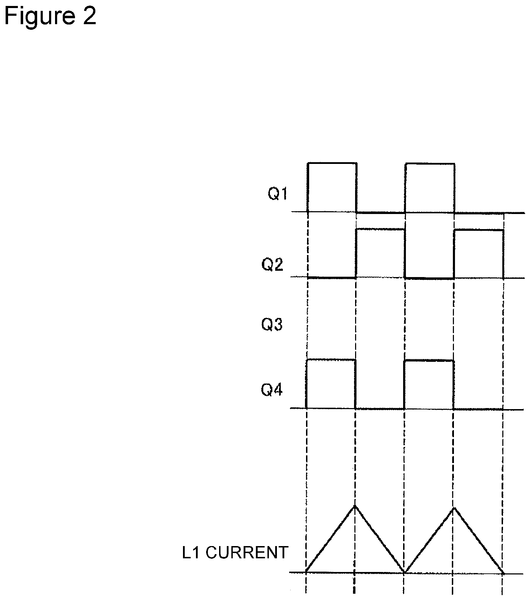

That is, during non-lighting of a discharge lamp DL, in the first state where two switching elements of the switching elements Q1 to Q4 positioned diagonally to each other are in on states (the first switching element Q1 and the forth switching element Q4 in Fig. 1), current from an output capacitor C5 of a DC power source part 2 serving as a power source flows in a loop composed of the two switching elements which are in on states, a first capacitor C1, a first inductor L1, and the output capacitor C5 of the DC power source part 2, so that the first capacitor C1 is charged and energy is accumulated in the first inductor L1. Further, in the second state where only one of the switching elements Q1 to Q4 is in the on state, current from the first inductor L1 serving as a power source flows in a loop composed of the one switching element which is in the on state (the second switching element Q2 in Fig. 1), a parasitic diode of the switching element (the third switching element Q3 in Fig. 1) positioned diagonally to the one switching element, the first inductor L1, and the output capacitor C5 of the DC power source part 2, so that the energy accumulated in the first inductor L1 is discharged. As a result, the current flowing in the first inductor L1 forms a triangular wave toward one direction (a positive direction in Fig. 2) such as shown in Fig. 2, so that the first capacitor C1 is charged by this current, and a DC component corresponding to a voltage between both the ends of the first capacitor C1 is superimposed on an output voltage from the lighting part 3 to the discharge lamp DL. Glow discharge is started in the discharge lamp DL by a resonance voltage generated by a resonance circuit of a second inductor L2 and a second capacitor C2 during the above operation, and transition from the above glow discharge to arc discharge is promoted by discharge of the first capacitor C1, where the discharge lamp DL starts to light.

Further, in the present embodiment, the starting operation P1 is continued for a predetermined starting time (for example, 900 ms) even if lighting of the discharge lamp DL is started halfway so that lamp current starts to flow at such a timing as shown by ts in Fig. 1. During the starting operation P1 after lighting of the discharge lamp DL, the discharge lamp DL configures the abovementioned loop instead of the first capacitor C1. Furthermore, the resonance circuit configured by the second inductor L2 and the second capacitor C2 superimposes spike-like current having a peak synchronized with a timing of switching between the on state and the off state of the switching elements Q1 to Q4 in the lighting part 3 onto the lamp current and going-out of the discharge lamp DL is suppressed during the starting operation P1 after the timing ts at which the discharge lamp DL has been lighted.

Further, during the starting operation P1, a sweep operation where a frequency of an operation of the lighting part 3 (namely, an on and off frequency of the respective switching elements Q1 to Q4, which is hereinafter called "operating frequency") is gradually lowered from an upper limit of a predetermined sweep frequency range to a lower limit thereof, the predetermined sweep frequency range including a resonance frequency (for example, 120kHz being a secondary resonance frequency of one third of a reference resonance frequency of 360 kHz) of the resonance circuit composed of the second inductor L2 and the second capacitor C2 in the lighting part 3, is repeated plural times. Thereby, the operating frequency can be caused to coincide with the abovementioned resonance frequency at any point in time during the starting operation P1 reliably regardless of variations in characteristic of the second inductor L2 or the second capacitor C2. Incidentally, in Fig. 1, the number of times of sweep operations is four, but the sweep operation is actually performed, for example, 98 times during one starting operation P1. Further, change of the operating frequency in the sweep operation is not limited to such change that the operating frequency is gradually lowered from an upper limit of the sweep frequency range to the lower limit thereof like the above, and it may be such change that the operating frequency is gradually raised from a lower limit of the sweep frequency range to the upper limit thereof. Such a configuration may be adopted that the operating frequency is reciprocated between the upper limit of the sweep frequency range and the lower limit thereof by alternately repeating a sweep operation which gradually raises the operating frequency and a sweep operation which gradually lowers the operating frequency.

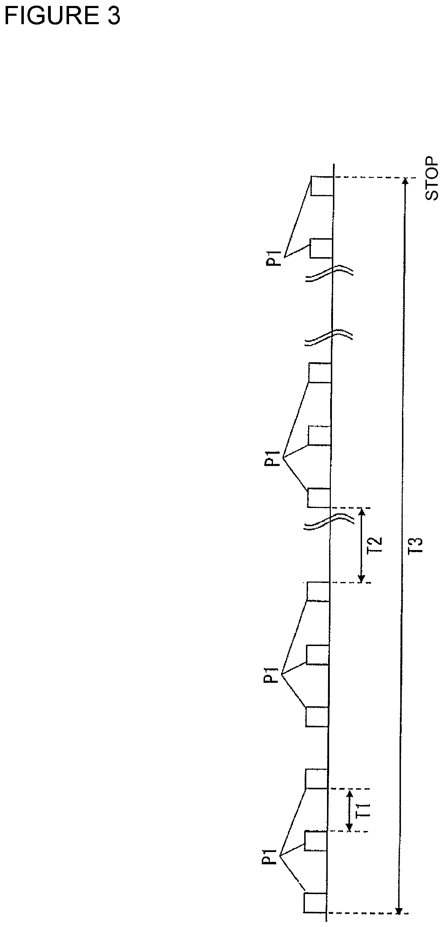

The control part 4 (an integrated circuit for control 40) determines whether or not the discharge lamp DL is lit at a termination time of the starting operation P1, namely, at a time when the abovementioned starting time has elapsed, and when it determines that the discharge lamp DL has not been lit, it stops the lighting part 3 (namely, maintains the respective switching elements Q1 to Q4 in the off state, respectively) for a predetermined first stop time T1 (for example, 5 seconds), as shown in Fig. 3, and thereafter it starts the starting operation P1, again. The control part 4 repeats a starting number P1 via the first stop time T1 predetermined times (for example, 6 times), it stops the lighting part 3 for a predetermined second stop time T2 (for example, 90 seconds) longer than the first stop time T1 in order to once lower pressure within the discharge lamp DL if the control part 4 determines that the discharge lamp DL has not been lit yet at a termination time of the final starting operation P1 of the series of operations (hereinafter, called "trial operations"), and it starts the trial operations again. When lighting of the discharge lamp DL is not detected even if trial operations such as described above are repeated for a upper limit time T3 (for example, 30 minutes), the control part 4 does not start the starting operation P1 thereafter.

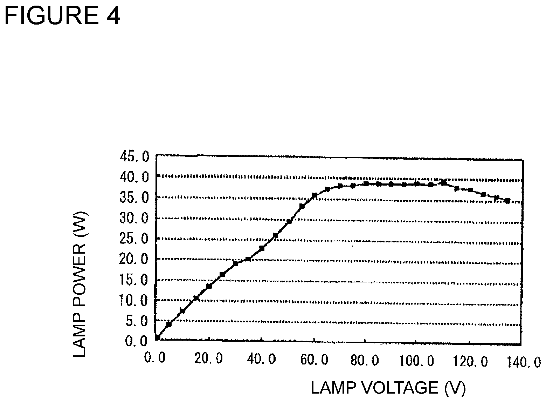

Further, if it is determined that the discharge lamp DL has been lit at the termination time of the starting operation P1, the control part 4 performs transition to a stable lighting operation P2. Incidentally, like the conventional example, the control part 4 may perform transition to the stable lighting operation P2 through an electrode heating operation (not shown). The content of the electrode heating operation or the stable lighting operation P2 can be set similar to that in the conventional example shown in Figs. 22 and 23. A relationship between power (hereinafter called "lamp power") outputted from the lighting part 3 to the discharge lamp DL and the lamp voltage, for example, such as shown in Fig. 4, can be used in the electrode heating operation or the stable lighting operation P2.

According to the abovementioned configuration, since the lamp current can be ensured after lighting start of the discharge lamp DL due to generation of a DC component in the lamp voltage during the starting operation P1, occurrence of going-out can be suppressed as compared with the case that the lamp voltage during the starting operation P1 does not include the DC component.

### (Second Embodiment)

Since a second embodiment has a basic configuration in common with the first embodiment, explanation about common portions is omitted.

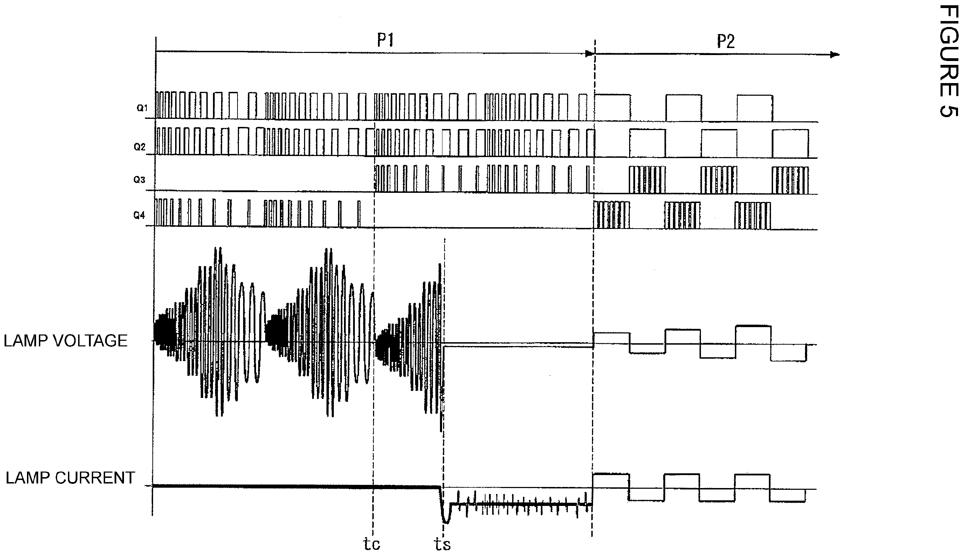

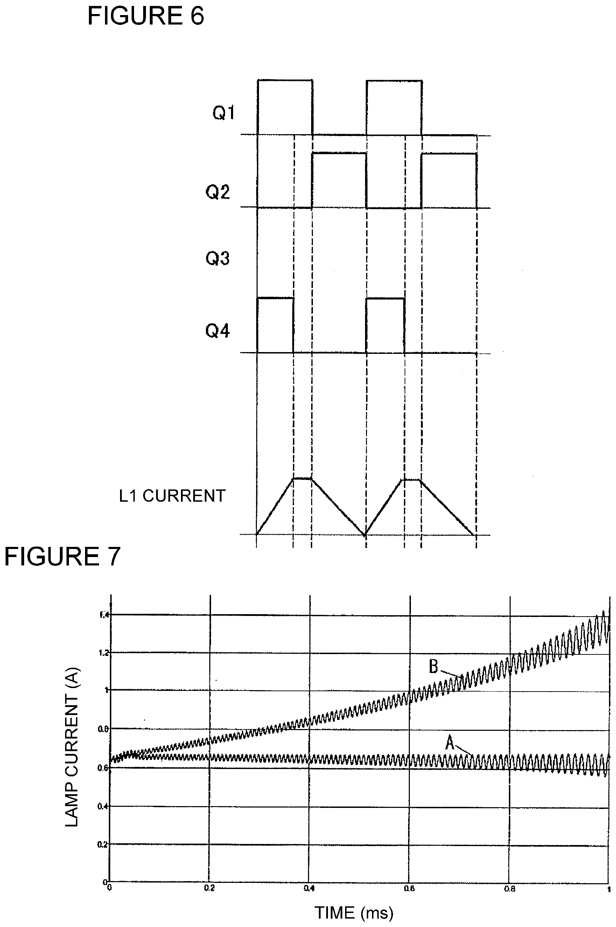

The present embodiment is different in content of the starting operation P1 from the first embodiment, and, as shown in Fig. 5, a first state where respective switching elements (the first switching element Q1 and the fourth switching element Q4 in the first half in Fig. 5, and the second switching element Q2 and the third switching element Q3 in the second half in Fig. 5) in one set of sets composed of the switching elements positioned diagonally to each other in the lighting part 3 are turned on, respectively, while respective switching elements in the other set are turned off, respectively, an intermediate state where only one (the first switching element Q1 in the first half in Fig. 5 and the second switching element Q2 in the second half in Fig. 5) of the switching elements in the one set is turned on, while the remaining three switching elements are turned off, respectively, and a second state where one (the second switching element Q2 in the first half in Fig. 5 and the first switching element Q1 in the second half in Fig. 5) of the switching elements in other set is turned on, while the remaining three switching elements are turned off, respectively are repeated periodically in a cyclic manner. That is, on-duty of the one (the first switching element Q1 in the first half in Fig. 5 and the second switching element Q2 in the second half in Fig. 5) of the switching elements positioned diagonally to each other in the lighting part 3 and simultaneously turned on is made larger than that of the other (the fourth switching element Q4 in the first half in Fig. 5 and the third switching element Q3 in the second half in Fig. 5). In the above intermediate state, current flowing in the first inductor L1 becomes approximately constant due to the fact that current flows in a closed loop which does not include the output capacitor C5 of the DC power source part 2 such as, for example, a loop including the first switching element Q1, the first inductor L1, and a parasitic diode of the third switching element Q3 in the first half in Fig. 5. Thereby, as shown in Fig. 6, current flowing in the first inductor L1 becomes a trapezoidal waveform.

Here, a simulation result of change of the lamp current during one sweep operation for gradually lowering the operating frequency from 140 kHz to 70 Hz is shown in Fig. 7 by a curve B regarding the case of the first embodiment and is shown by a curve A regarding the case of the present embodiment. In Fig. 7, a horizontal axis indicates time, where a left end of the horizontal axis is a start time point of a sweep operation at which the operating frequency is 140 kHz, while a right end thereof is a terminal time point of the sweep operation at which the operating frequency is 70 kHz. Here, though current flowing in the first inductor L1 during the starting operation P1 becomes a triangular wave as shown in Fig. 2 in the first embodiment, current flowing in the first inductor L1 becomes a trapezoidal waveform such as shown in Fig. 6 in the present embodiment, so that the peak of the lamp current can be suppressed to be low as represented in Fig. 7. Accordingly, since small parts can be used as circuit parts such as the first inductor L1, size-reduction of the discharge lamp lighting device can be made possible.

Further, by performing switching between the switching elements defined as the one set in the staring operation and the switching elements defined as the other set at a time point tc when a half (for example, 450 ms) of the starting time has elapsed from the start of the starting operation P1, in other words, by performing a change such as changing the switching element to be maintained in an off state from the third switching element Q3 to the fourth switching element Q4, the polarity of the DC component in the output of the lighting part 3 is inverted. Thereby, non-lighting of the discharge lamp DL due to insufficient heating in only one of the electrodes in the discharge lamp DL or life reduction due to progression of intensive wear in one of the electrodes in the discharge lamp DL can be prevented. Further, going-out of the discharge lamp DL when the polarity is inverted as described above is suppressed by spike-like components generated in the lamp current by the resonance circuit composed of the second inductor L2 and the second capacitor C2. That is, the abovementioned resonance circuit is spike superimposing means in claims. Inversion of polarity such as described above may be performed plural times during the starting operation P1.

### (Third Embodiment)

Since a third embodiment has a basic configuration in common with the first embodiment, explanation about common portions is omitted.

In the present embodiment, the polarity of the DC component of the output of the lighting part 3 is also inverted by performing such a change as switching the switching element maintained in an off state from the third switching element Q3 to the fourth switching element Q4 at a time point tc when a half (for example, 450 ms) of the starting time has elapsed from the start of the starting operation P1 like the second embodiment. Thereby, non-lighting of the discharge lamp DL due to insufficient heating in only one of the electrodes in the discharge lamp DL or life reduction due to progression of intensive wear in one of the electrodes in the discharge lamp DL can be prevented like the second embodiment. Further, going-out of the discharge lamp DL when the polarity is inverted as described above is suppressed by spike-like component generated in the lamp current by the resonance circuit composed of the second inductor L2 and the second capacitor C2. That is, the abovementioned resonance circuit is spike superimposing means in claims. Inversion of polarity such as described above may be performed plural times during the starting operation P1.

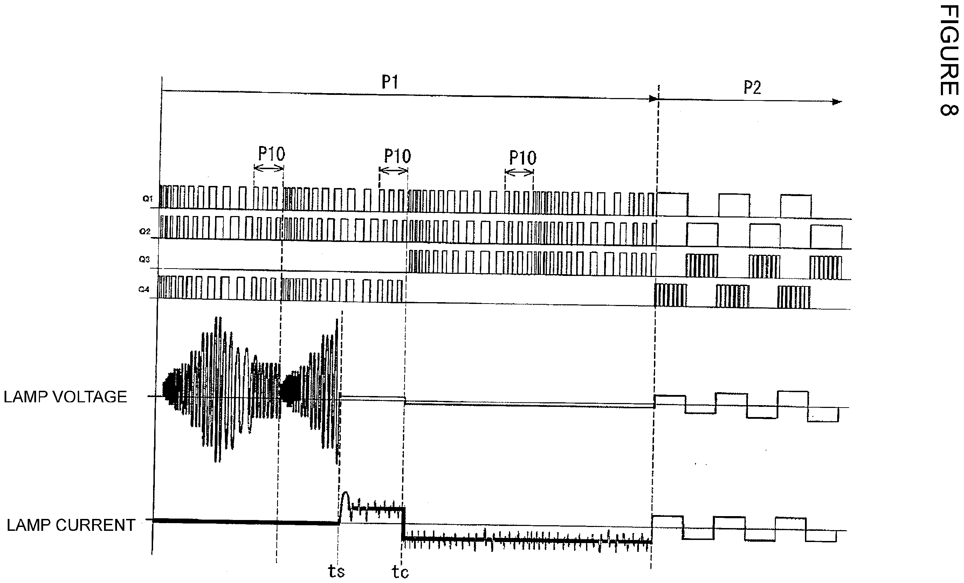

Further, in the present embodiment, as shown in Fig. 8, the control part 4 performs an intermediate operation P10 as maintaining the operating frequency in a predetermined intermediate frequency lower than an upper limit frequency of the sweep frequency range (hereinafter, called "upper limit frequency") and higher than a lower limit frequency of the sweep frequency range (hereinafter, called "lower limit frequency") for a predetermined time for each of individual sweep operation terminations, namely, for each operation of switching the operating frequency from the lower limit of the sweep frequency range to the upper limit thereof, in the starting operation P1.

Here, the DC component of the lamp current when the operating frequency is f is described as I (f), the upper limit frequency is described as ft, the lower limit frequency is described as fb, and the intermediate frequency is described as fm. Thereby, a bottom value of the lamp current when the operating frequency is switched from the lower limit frequency fb to the intermediate frequency fm is described as I (fm) - (I (fb) - I (fm)), and the bottom value of the lamp current when the operating frequency is switched from the intermediate frequency fm to the upper limit frequency ft is described as I (ft) - (I (fm) - I (ft)). If the abovementioned two bottom values are equal to each other, it can be thought that the bottom value of the lamp current becomes 0 due to vibration current caused by frequency switching such as switching from the lower limit frequency fb to the intermediate frequency fm or from the intermediate frequency fm to the upper limit frequency ft so that going-out of the discharge lamp DL can be avoided. Therefore, it is desirable to adopt such an intermediate frequency that the abovementioned bottom values become equal to each other, namely, I (fm) = (2 × I (ft) + I (fb))/3 is satisfied.

As described above, by interposing the operation at the intermediate frequency between the sweep operations, going-out of the discharge lamp DL due to instantaneous lowering of the lamp current can be suppressed as compared with the case that interposition of the operation at the intermediate frequency is not included.

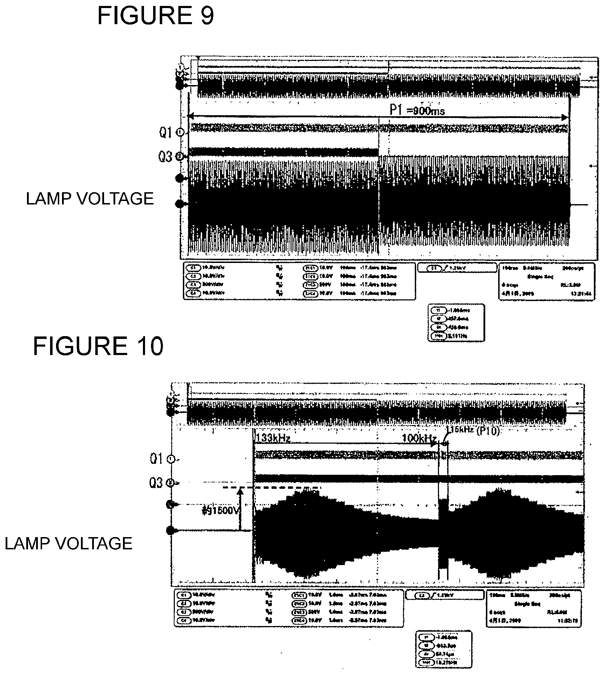

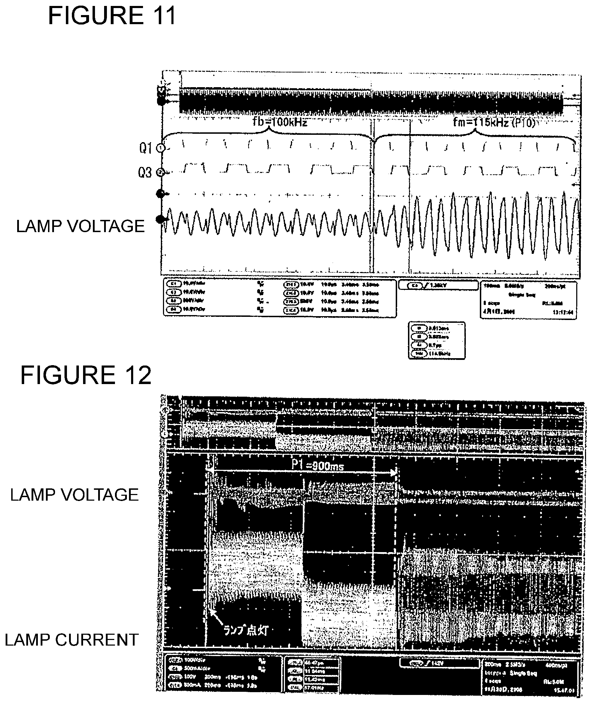

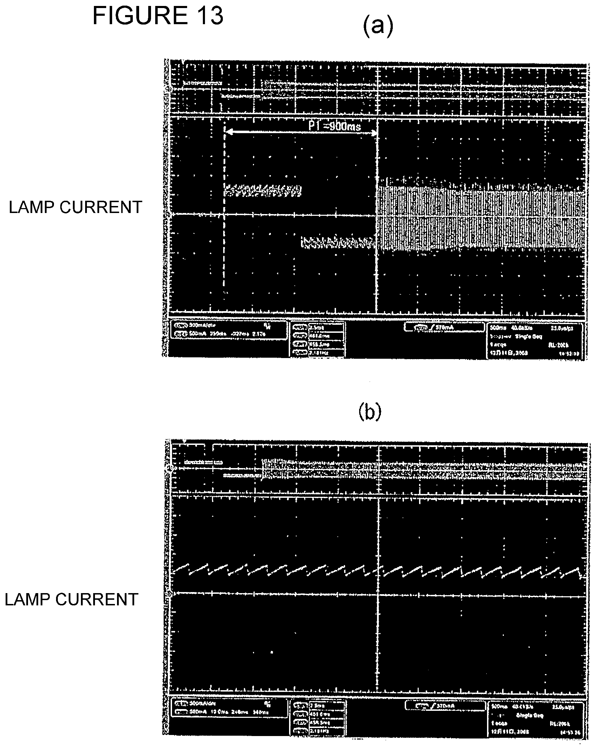

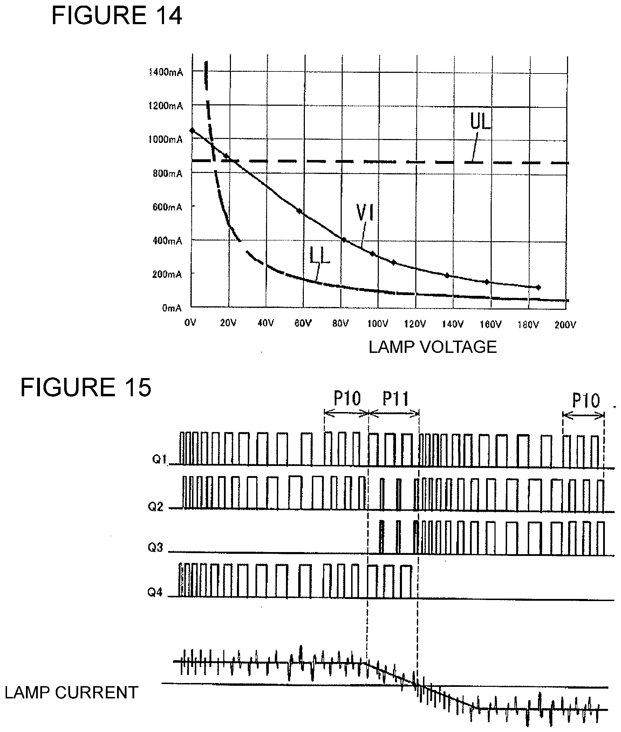

An example of a waveform of a lamp voltage in a case that the output voltage of the DC power source part 1 is set at 350 V, the inductance of the first inductor L1 is set at 680 µH, the capacitance of the first capacitor C1 is set to 0.22 µF, the inductance of the primary winding part (shunt winding) of the second inductor L2, namely, a site positioned nearer to the switching elements Q1 and Q2 side (the left side in Fig. 2) than the tap is set at 90 µH, the number of turns of the primary winding part in the second inductor L2 is set at 48 turns, the number of the total turns is set at 48.5 turns, and the resistor R1 connected to the second capacitor C2 is configured by a series circuit composed of three resistors having a resistance value of 6.2 Ω, respectively, and in a case that the upper limit frequency ft is set to 133 kHz, the lower limit frequency is set at 100 kHz, the intermediate frequency fm is set to 115kHz is shown in Figs. 9 to 12, an examples of a waveform of the lamp current is shown in Figs. 12, 13A, and 13B, and a relationship between the lamp current and the lamp voltage during the starting operation P1 is shown by a curve VI in Fig. 14. Figs. 10, 11, and 13B show a portion of Fig. 9, a portion of Fig. 10, and a portion of Fig. 13A in an enlarged manner, respectively. Further, Fig. 13A shows a waveform obtained by removing a spike-shaped component from the waveform of the lamp current shown in Fig. 12. In the example shown in Fig. 12, the discharge lamp DL lights just after start of the starting operation P1 so that lamp current starts to flow. In the above example, the maximum value of the absolute value of the lamp voltage during the sweep operation reaches about 1500 V. Here, in Fig. 14, a broken line UL and a curve LL show an upper limit and a lower limit of a region which is thought to be an allowable range of the lamp current. That is, it is thought that when the lamp current is less than the above region, a starting performance of the discharge lamp DL deteriorates to an unallowable extent, while high electric stress acts on the discharge lamp DL to an unallowable extent when the lamp current is more than the above range.

### (Fourth Embodiment)

Since a fourth embodiment has a basic configuration in common with the third embodiment, explanation about common portions is omitted.

In the third embodiment, there is a possibility that at the time tc when the polarity of the DC component of the lamp current is inverted during the starting operation P1, charge charged in the first capacitor C1 connected in parallel with the discharge lamp DL is discharged so that current is increased instantaneously and the current imparts excessive electric stress on circuit parts. In the present embodiment, therefore, when the polarity of the DC component of the lamp current is inverted in the starting operation P1, a transient operation P11 of gradually lowering the voltage between both the ends of the first capacitor C1 is performed.

As shown in Fig. 15, for example, the transient operation P11 is for alternately ON/OFF-driving one set of sets of switching elements positioned diagonally to each other in the lighting part 3 and the other set, and it is for making on-duty of respective switching elements (the first switching element Q1 and the fourth switching element Q4 in Fig. 15) in one set of sets of switching elements positioned diagonally to each other, both of the respective switching elements in the one set having been ON/OFF-driven until then, larger than on-duty of respective switching elements (the second switching element Q2 and the third switching element Q3 in Fig. 15) in the other set.

According the above configuration, since the voltage between both the ends of the first capacitor C1 is gradually lowered during the transient operation P11, electric stress acting on circuit parts can be suppressed due to discharge current of the first capacitor C1 at a polarity inversion time of the DC component of the lamp current as compared with the case that the transient operation P11 is not performed.

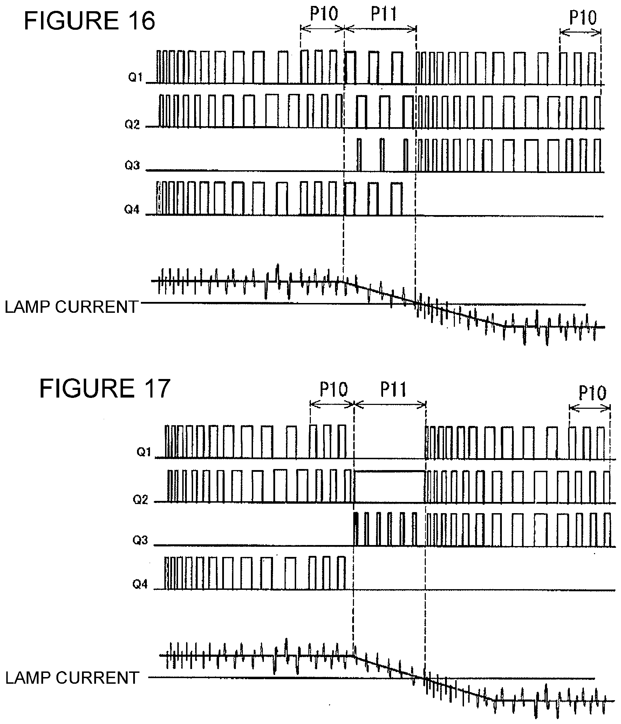

Incidentally, the transient operation P11 is not limited to the transient operation shown in Fig. 15 and such a configuration can be adopted that only on-duty of one switching element (the third switching element Q3 in Fig. 16) in the other set is made smaller than on-duties of the remaining three switching elements, for example, as shown in Fig. 16. In other words, the transient operation P11 shown in Fig. 16 periodically and cyclically repeats a state where the respective switching elements (the first switching element Q1 and the fourth switching element Q4 in Fig. 16) which are defined to be included in the one set until just before are turned on, respectively, and the respective switching elements (the second switching element Q2 and the third switching element Q3 in Fig. 16) which are defined to be included the other set until just before are turned off, respectively, a state where the respective switching elements which are defined to be included in the other set until just before are turned on, respectively and the respective switching elements which are defined to be included in the one set until just before are turned off, respectively, and a state where one (the second switching element Q2 in Fig. 16) of the respective switching elements which are defined to be included in the other set until just before is turned on and the remaining three switching elements are turned off, respectively.

Alternatively, as shown in Fig. 17, the transient operation P11 may be configured such that respective switching elements (the first switching element Q1 and the fourth switching element Q4 in Fig. 17) in one set of sets of switching elements positioned diagonally to each other, both of the respective switching elements in the one set being ON/OFF-driven until then, are maintained in the off state, respectively, and one (the second switching element Q2 in Fig. 17) of the switching elements in the other set is maintained in the on state while the other (the third switching element Q3 in Fig. 17) of the switching elements is periodically ON/OFF-driven.

Furthermore, various transient operations P11 such as described above can be applied to the second embodiment.

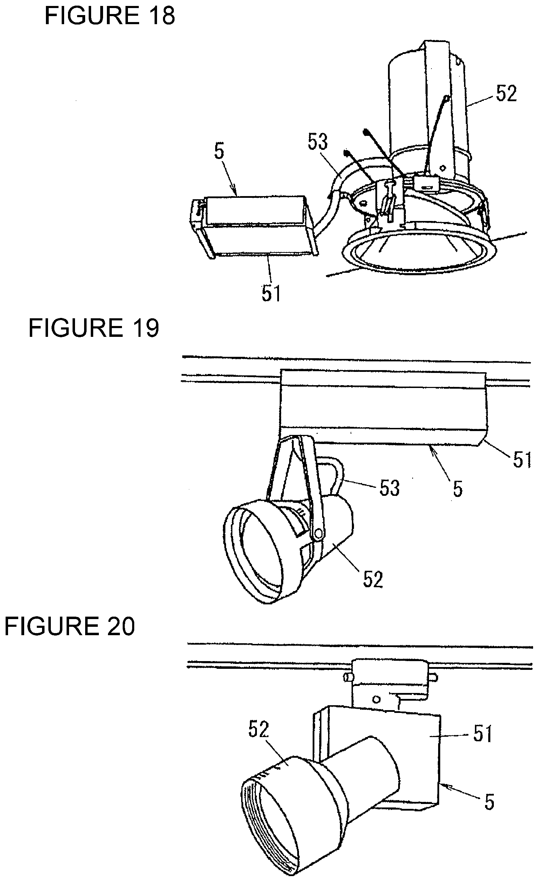

The various discharge lamp lighting devices explained regarding the first embodiment to the fourth embodiment can be used in illumination fixtures 5, for example, such as shown in Figs. 18 to 20. The illumination fixtures 5 shown in Figs. 18 to 20 are provided with fixture main bodies 51 housing the discharge lamp lighting device and lighting bodies 52 holding the discharge lamp DL. The illumination fixture 5 shown in Fig. 18 and the illumination fixture 5 shown in Fig. 19 are provided with power feeders 53 electrically connecting the discharge lamp lighting device and the discharge lamp DL with each other, respectively. The illumination fixture 5 shown in Fig. 18 is a down light where both the fixture main body 51 and the light body 52 are fixed to a ceiling face, while the illumination fixture 5 shown in Fig. 19 and the illumination fixture 5 shown in Fig. 20 are spot lights including the light body 52 mounted in an oscillating manner to the fixture main body 51 fixed to a mounting face such as a ceiling face. Though the various illumination fixtures 5 such as described above can be realized by well-known techniques, detailed explanation thereof is omitted.

### [Description of Reference Numerals]

- 3: Lighting part
- 4: Control part
- 5: Illumination fixture
- 51: Fixture main body
- C1: First capacitor
- C2: Second capacitor (a portion of spike superimposing means in claims)
- L2: Second inductor (a portion of spike superimposing means in claims)
- P1: Starting operation
- P11: Transient operation
- Q1 to Q4: Switching element

## Claims

1. A discharge lamp lighting device comprising:
a lighting part (3) including at least a capacitor (C1) connected in parallel with a discharge lamp (DL) and a resonance circuit (L2, C2) connected to the discharge lamp (DL) to output AC power to the discharge lamp (DL); and
a control part (4) for controlling the discharge lamp (DL), wherein
the control part (4) is for, upon lighting of the discharge lamp (DL), continuing a starting operation (P1) for controlling the lighting part (3) for a predetermined time so as to make the frequency of an output of the lighting part (3) sufficiently close to the resonance frequency of the resonance circuit (L2, C2) included in the lighting part (3) to such an extent that a voltage required for starting of discharge in the discharge lamp (DL) is outputted to the discharge lamp (DL), and the control part (4) is configured to control the lighting part (3) so as to generate a DC component in an output voltage to the discharge lamp (DL) during the starting operation (PI);
wherein the lighting part (3) comprises a full-bridge (Q1-Q4) type inverter circuit inputted with DC power to output AC power;
wherein the control part (4) is configured to control one set (Q1, Q4) of sets (Q1, Q⁴; Q2, Q3) of switching elements, of said inverter circuit each set being composed of two switching elements positioned diagonally to each other in the lighting part (3), and is further configured to asymmetrically control the other set (Q2, Q3) during the starting operation (P1), thereby generating the DC component in the output voltage to the discharge lamp (DL); and
wherein in the lighting part (3), the respective switching elements (Q1-Q4) have parasitic diodes opposed to DC power to be inputted, respectively;
**characterized in that**
the control part (4) is configured to control the lighting part (3) in the starting operation (P1) so as to periodically and alternately repeat a state of turning on the switching elements (Q1, Q4; Q2, Q3) in one set (Q1, Q4) of sets of switching elements, respectively, and turning off the switching elements in the other set (Q2, Q3), respectively, and a state of turning on only one (Q1; Q2) of the switching elements and turning off the remaining three switching elements, respectively.

2. The discharge lamp lighting device according to claim 1, wherein:
the control part (4) is configured to control the lighting part (3) in the starting operation (P1) so as to periodically and cyclically repeat a state of turning on the switching elements in one set (Q1, Q4; Q2, Q3) of sets of switching elements, respectively, each set being composed of switching elements positioned diagonally to each other in the lighting part (3), and turning off the switching elements (Q2, Q3; Q1, Q4) in the other set, respectively, a state of turning on only one (Q1) of the switching elements in the one set and turning off the remaining three switching elements, respectively, and a state of turning on only one (Q2) of the switching elements in the other set and turning off the remaining three switching elements, respectively.

3. The discharge lamp lighting device according to any one of claims 1 to 2, wherein
the control part (4) is configured to gradually change the frequency of the operation of the lighting part (3) within a predetermined sweep frequency range including the resonance frequency of the resonance circuit (L2, C2) included in the lighting part (3) in the starting operation (P1).

4. The discharge lamp lighting device according to claim 3, wherein
the control part (4) is configured to gradually decrease the frequency of the operation of the lighting part (3) from an upper limit frequency of the sweep frequency range to a lower limit frequency thereof in the starting operation (P1).

5. The discharge lamp lighting device according to claim 4, wherein
the control part (4) is configured to periodically perform a change of the frequency of the operation of the lighting part (3) plural times in the starting operation (P1), and the control part (4) changes the frequency of the operation of the lighting part (3) to a frequency lower than the upper limit frequency of the sweep frequency range and higher than the lower limit frequency of the sweep frequency range for a predetermined time before changing the frequency of the operation of the lighting part (3) to the upper limit frequency of the sweep frequency range after changing the frequency of the operation of the lighting part to the lower limit frequency of the sweep frequency range.

6. The discharge lamp lighting device according to any one of claims 1 to 5, wherein
the control part is configured to control the lighting part (3) so as to invert the polarity of the DC component of the output voltage to the discharge lamp (DL) at least once during the starting operation (P1).

7. The discharge lamp lighting device according to claim 1 or 2, wherein
the control part (4) is configured to perform at least one switch during the starting operation (P1) regarding which one of sets of switching elements (Q1, Q4; Q2, Q3), is defined as the one set, and to control the lighting part (3) so as to perform a transient operation (P11) for gradually lowering a voltage between both the ends of the capacitor (C1) connected in parallel with the discharge lamp (DL) for a predetermined time at the time of switching.

8. The discharge lamp lighting device according to claim 7, wherein
the transient operation (P11) is an operation where the one set (Q1, Q4) of the sets (Q1, Q4; Q2, Q3) of switching elements, cach set being composed of switching elements positioned diagonally to each other in the lighting part, and the other set (Q2, Q3) are alternately and periodically turned on and on-duty of the respective switching elements in a set defined as the one set (Q1, Q4) until just before is made higher than on-duty of the respective switching elements in a set defined as the other set (Q2, Q3) until just before.

9. The discharge lamp lighting device according to claim 7, wherein
the transient operation (F11) is an operation of periodically and cyclically repeating a state of turning on the respective switching elements in a set defined as the one set (Q1, Q4) until just before, respectively, and turning off the respective switching elements in a set defined as the other set (Q2, Q3) until just before, respectively, a state of turning on the respective switching elements in a set defined as the other set (Q2, Q3) until just before, respectively, and turning off the respective switching elements in a set defined as the one set (Q1, Q4) until just before, respectively, wherein the on duty of one switching clement (Q3) in the other set (Q2, Q3) is smaller than on duties of the remaining three switching elements (Q1, Q2, Q4).

10. The discharge lamp lighting device according to claim 7, wherein
the transient operation (P11) is an operation of turning off the respective switching elements in a set defined as the one set (Q1, Q4) until just before, respectively, and of, in an on state of one (Q2) of the switching elements in a set defined as the other set (Q2, Q3) until just before, periodically turning on and off the other (Q3) of the switching elements in a set defined as the other set (Q2, Q3) until just before.

11. The discharge lamp lighting device according to claim 6, wherein
the lighting part (3) includes spike superimposing means (L2, C2) adapted to superimpose spike-like component on output current to the discharge lamp (DL) after lighting of the discharge lamp (DL).

12. An illumination fixture comprising:
the discharge lamp (DL) lighting device according to any one of claims 1 to 11; and
a fixture main body (51) holding a discharge lamp (DL) lit by the discharge lamp lighting device and the discharge lamp lighting device, respectively.

## Patentansprüche

1. Beleuchtungsvorrichtung für eine Entladungslampe, die aufweist:
einen Beleuchtungsteil (3), der wenigstens einen Kondensator (C1), der parallel zu einer Entladungslampe (DL) geschaltet ist, und einen Resonanzschaltkreis (L2, C2), aufweist, der mit der Entladungslampe (DL) verbunden ist, um Wechselspannungsleistung zu der Entladungslampe (DL) auszugeben; und
einen Steuerteil (4) zur Steuerung der Entladungslampe (DL), wobei
der Steuerteil (4) dazu dient, um beim Zünden der Entladungslampe (DL) einen Startvorgang (P1) zur Steuerung des Beleuchtungsteils (3) für eine vorbestimmte Zeit derart fortzusetzen, dass die Frequenz einer Ausgabe des Beleuchtungsteils (3) nahe genug an der Resonanzfrequenz des Resonanzschaltkreises (L2, C2), der in dem Beleuchtungsteil (3) enthalten ist, insoweit liegt, dass eine zum Starten einer Entladung in der Entladungslampe (DL) erforderliche Spannung zu der Entladungslampe (DL) ausgegeben wird, und der Steuerteil (4) eingerichtet ist, um den Beleuchtungsteil (3) derart zu steuern, dass dieser eine Gleichspannungskomponente in einer Ausgangsspannung zu der Entladungslampe (DL) während des Startvorgangs (P1) generiert;
wobei der Beleuchtungsteil (3) eine Wechselrichterschaltung einer Vollbrücken (Q1-Q4) - Bauart aufweist, dem Gleichspannungsleistung zugeführt wird, um Wechselspannungsleistung auszugeben;
wobei der Steuerteil (4) eingerichtet ist, um einen Satz (Q1, Q4) von Sätzen (Q1, Q4; Q2, Q3) von Schaltelementen der Wechselrichterschaltung zu steuern, wobei jeder Satz aus zwei Schaltelementen besteht, die in dem Beleuchtungsteil (3) diagonal zueinander positioniert sind, und ferner eingerichtet ist, um den anderen Satz (Q2, Q3) während des Startvorgangs (P1) asymmetrisch zu steuern, wodurch die Gleichspannungskomponente in der Ausgangsspannung zu der Entladungslampe (DL) generiert wird; und
wobei in dem Beleuchtungsteil (3) die jeweiligen Schaltelemente (Q1-Q4) jeweils zu der Gleichspannungsleistung, die zugeführt werden soll, entgegengesetzte parasitäre Dioden aufweisen;
**dadurch gekennzeichnet, dass**
der Steuerteil (4) eingerichtet ist, um den Beleuchtungsteil (3) in dem Startvorgang (P1) derart zu steuern, dass dieser einen Zustand des Einschaltens der jeweiligen Schaltelemente (Q1, Q4, Q2, Q3) in einem Satz (Q1, Q4) der Sätze von Schaltelementen und des Ausschaltens der jeweiligen Schaltelemente in dem anderen Satz (Q2, Q3) sowie einen Zustand des Einschaltens lediglich eines (Q1; Q2) der Schaltelemente bzw. des Ausschaltens der restlichen drei Schaltelemente periodisch und abwechselnd wiederholt.

2. Beleuchtungsvorrichtung für eine Entladungslampe nach Anspruch 1, wobei:
der Steuerteil (4) eingerichtet ist, um den Beleuchtungsteil (3) in dem Startvorgang (P1) derart zu steuern, dass dieser einen Zustand des Einschaltens der jeweiligen Schaltelemente in einem Satz (Q1, Q4; Q2, Q3) der Sätze von Schaltelementen, wobei jeder Satz aus Schaltelementen besteht, die in dem Beleuchtungsteil (3) diagonal zueinander positioniert sind, und des Ausschaltens der jeweiligen Schaltelemente (Q2, Q3; Q1, Q4) in dem anderen Satz, einen Zustand des Einschaltens lediglich eines (Q1) der Schaltelemente in dem einen Satz bzw. des Ausschaltens der restlichen drei Schaltelemente und einen Zustand des Einschaltens lediglich eines (Q2) der Schaltelemente in dem anderen Satz bzw. des Ausschaltens der restlichen drei Schaltelemente periodisch und zyklisch wiederholt.

3. Beleuchtungsvorrichtung für eine Entladungslampe nach einem beliebigen der Ansprüche 1 bis 2, wobei
der Steuerteil (4) eingerichtet ist, um in dem Startvorgang (P1) die Frequenz des Betriebs des Beleuchtungsteils (3) innerhalb eines vorbestimmten Durchlauffrequenzbereiches, der die Resonanzfrequenz des Resonanzschaltkreises (L2, C2) enthält, der in dem Beleuchtungsteil (3) enthalten ist, allmählich zu verändern.

4. Beleuchtungsvorrichtung für eine Entladungslampe nach Anspruch 3, wobei
der Steuerteil (4) eingerichtet ist, um in dem Startvorgang (P1) die Frequenz des Betriebs des Beleuchtungsteils (3) von einer oberen Grenzfrequenz des Durchlauffrequenzbereiches zu einer unteren Grenzfrequenz von diesem allmählich zu verringern.

5. Beleuchtungsvorrichtung für eine Entladungslampe nach Anspruch 4, wobei
der Steuerteil (4) eingerichtet ist, um eine Änderung der Frequenz des Betriebs des Beleuchtungsteils (3) mehrere Male in dem Startvorgang (P1) periodisch durchzuführen, und der Steuerteil (4) die Frequenz des Betriebs des Beleuchtungsteils (3) zu einer Frequenz, die niedriger als die obere Grenzfrequenz des Durchlauffrequenzbereiches und höher als die untere Grenzfrequenz des Durchlauffrequenzbereiches ist, für eine vorbestimmte Zeit verändert, bevor er die Frequenz des Betriebs des Beleuchtungsteils (3) zu der oberen Grenzfrequenz des Durchlauffrequenzbereiches nach einer Veränderung der Frequenz des Betriebs Beleuchtungsteils zu der unteren Grenzfrequenz des Durchlauffrequenzbereiches verändert.

6. Beleuchtungsvorrichtung für eine Entladungslampe nach einem beliebigen der Ansprüche 1 bis 5, wobei
der Steuerteil eingerichtet ist, um den Beleuchtungsteil (3) derart zu steuern, dass dieser die Polarität der Gleichspannungskomponente der Ausgangsspannung zu der Entladungslampe (DL) wenigstens einmal während des Startvorgangs (P1) invertiert.

7. Beleuchtungsvorrichtung für eine Entladungslampe nach Anspruch 1 oder 2, wobei
der Steuerteil (4) eingerichtet ist, um wenigstens eine Umschaltung während des Startvorgangs (P1) unter Berücksichtigung, welcher einzelne der Sätze von Schaltelementen (Q1, Q4; Q2, Q3) als der eine Satz definiert ist, durchzuführen und den Beleuchtungsteil (3) derart zu steuern, dass dieser einen transienten Vorgang (P11) zur allmählichen Verringerung einer Spannung zwischen den beiden Enden des Kondensators (C1), der parallel zu der Entladungslampe (DL) angeschlossen ist, für eine vorbestimmte Zeit zu dem Zeitpunkt der Umschaltung durchführt.

8. Beleuchtungsvorrichtung für eine Entladungslampe nach Anspruch 7, wobei
der transiente Vorgang (P11) ein Betriebsvorgang ist, bei dem der eine Satz (Q1, Q4) der Sätze (Q1, Q4; Q2, Q3) von Schaltelementen, wobei jeder Satz aus Schaltelementen besteht, die in dem Beleuchtungsteil diagonal zueinander positioniert sind, und der andere Satz (Q2, Q3) abwechselnd und periodisch eingeschaltet werden und die Einschaltdauer der jeweiligen Schaltelemente in einem Satz, der bis kurz davor als der eine Satz (Q1, Q4) definiert ist, höher als die Einschaltdauer der jeweiligen Schaltelemente in einem Satz, der bis kurz davor als der andere Satz (Q2, Q3) definiert ist, eingestellt ist.

9. Beleuchtungsvorrichtung für eine Entladungslampe nach Anspruch 7, wobei
der transiente Vorgang (P11) ein Betriebsvorgang einer periodischen und zyklischen Wiederholung eines Zustands des Einschaltens der jeweiligen Schaltelemente in einem Satz, der bis kurz davor als der eine Satz (Q1, Q4) definiert ist, jeweils, und des Ausschaltens der jeweiligen Schaltelemente in einem Satz, der bis kurz davor als der andere Satz (Q2, Q3) definiert ist, jeweils, eines Zustands des Einschaltens der jeweiligen Schaltelemente in einem Satz, der bis kurz davor als der andere Satz (Q2, Q3) definiert ist, jeweils, und des Ausschaltens der jeweiligen Schaltelemente in einem Satz, der bis kurz davor als der eine Satz (Q1, Q4) definiert ist, jeweils, ist, wobei die Einschaltdauer des einen Schaltelementes (Q3) in dem anderen Satz (Q2, Q3) kleiner als die Einschaltdauern der restlichen drei Schaltelemente (Q1, Q2, Q4) ist.

10. Beleuchtungsvorrichtung für eine Entladungslampe nach Anspruch 7, wobei
der transiente Vorgang (P11) ein Betriebsvorgang des Ausschaltens der jeweiligen Schaltelemente in einem Satz, der bis kurz davor als der eine Satz (Q1, Q4) definiert ist, jeweils, und, in einem Einschaltzustand eines (Q2) der Schaltelemente in einem Satz, der bis kurz davor als der andere Satz (Q2, Q3) definiert ist, des periodischen Ein- und Ausschaltens des anderen (Q3) der Schaltelemente in einem Satz, der bis kurz davor als der andere Satz (Q2, Q3) definiert ist, ist.

11. Beleuchtungsvorrichtung für eine Entladungslampe nach Anspruch 6, wobei
der Beleuchtungsteil (3) Impulsspitzenüberlagerungsmittel (L2, C2) enthält, die eingerichtet sind, um nach einer Zündung der Entladungslampe (DL) eine impulsartige Komponente einem Ausgangsstrom zu der Entladungslampe (DL) zu überlagern.

12. Beleuchtungsarmatur, die aufweist:
die Beleuchtungsvorrichtung für eine Entladungslampe (DL) nach einem beliebigen der Ansprüche 1 bis 11; und
einen Armaturhauptkörper (51), der eine Entladungslampe (DL), die durch die Beleuchtungsvorrichtung für eine Entladungslampe gezündet wird, und die Beleuchtungsvorrichtung für eine Entladungslampe jeweils hält.

## Revendications

1. Dispositif d'allumage de lampe à décharge comprenant :
une partie d'allumage (3) incluant au moins un condensateur (C1) connecté en parallèle avec une lampe à décharge (DL) et un circuit résonnant (L2, C2) connecté à la lampe à décharge (DL) pour délivrer de la puissance en courant alternatif (CA) à la lampe à décharge (DL) ; et
une partie de commande (4) pour commander la lampe à décharge (DL), dans lequel
la partie de commande (4) est destinée à, lors de l'allumage de la lampe à décharge (DL), continuer une opération de démarrage (P1) consistant à commander la partie d'allumage (3) pendant un temps prédéterminé de manière à rendre la fréquence d'une sortie de la partie d'allumage (3) suffisamment proche de la fréquence de résonance du circuit résonnant (L2, C2) inclus dans la partie d'allumage (3) dans une mesure telle qu'une tension requise pour le démarrage de décharge dans la lampe à décharge (DL) soit délivrée à la lampe à décharge (DL), et la partie de commande (4) est configurée pour commander la partie d'allumage (3) de manière à générer une composante continue dans une tension de sortie appliquée à la lampe à décharge (DL) durant l'opération de démarrage (P1) ;
dans lequel la partie d'allumage (3) comprend un circuit onduleur du type en pont complet (Q1-Q4) qui reçoit de la puissance en courant continu (CC) pour délivrer de la puissance CA ;
dans lequel la partie de commande (4) est configurée pour commander un premier ensemble (Q1, Q4) parmi des ensembles (Q1, Q4 ; Q2, Q3) d'éléments de commutation dudit circuit onduleur, chaque ensemble étant composé de deux éléments de commutation positionnés diagonalement l'un par rapport à l'autre dans la partie d'allumage (3), et est en outre configurée pour commander asymétriquement l'autre ensemble (Q2, Q3) durant l'opération de démarrage (P1), pour ainsi générer la composante continue dans la tension de sortie appliquée à la lampe à décharge (DL) ; et
dans lequel dans la partie d'allumage (3), les éléments de commutation respectifs (Q1-Q4) comportent des diodes parasites s'opposant à la réception de la puissance CC, respectivement ;
**caractérisé en ce que**
la partie de commande (4) est configurée pour commander la partie d'allumage (3) dans l'opération de démarrage (P1) de manière à répéter périodiquement et alternativement un état de déblocage des éléments de commutation (Q1, Q4 ; Q2, Q3) dans un premier ensemble (Q1, Q4) parmi les ensembles d'éléments de commutation, respectivement, et de blocage des éléments de commutation dans l'autre ensemble (Q2, Q3), respectivement, et un état de déblocage d'un seul (Q1 ; Q2) des éléments de commutation et de blocage des trois éléments de commutation restants, respectivement.

2. Dispositif d'allumage de lampe à décharge selon la revendication 1, dans lequel :
la partie de commande (4) est configurée pour commander la partie d'allumage (3) dans l'opération de démarrage (P1) de manière à répéter périodiquement et cycliquement un état de déblocage des éléments de commutation dans un premier ensemble (Q1, Q4 ; Q2, Q3) parmi les ensembles d'éléments de commutation, respectivement, chaque ensemble étant composé d'éléments de commutation positionnés diagonalement l'un par rapport à l'autre dans la partie d'allumage (3), et de blocage des éléments de commutation (Q2, Q3 ; Q1, Q4) dans l'autre ensemble, respectivement, un état de déblocage d'un seul (Q1) des éléments de commutation dans le premier ensemble et de blocage des trois autres éléments de commutation, respectivement, et un état de déblocage d'un seul (Q2) des éléments de commutation dans l'autre ensemble et de blocage des trois autres éléments de commutation, respectivement.

3. Dispositif d'allumage de lampe à décharge selon l'une quelconque des revendications 1 à 2, dans lequel
la partie de commande (4) est configurée pour changer graduellement la fréquence de fonctionnement de la partie d'allumage (3) dans une plage de fréquence de balayage prédéterminée incluant la fréquence de résonance du circuit résonnant (L2, C2) inclus dans la partie d'allumage (3) dans l'opération de démarrage (P1).

4. Dispositif d'allumage de lampe à décharge selon la revendication 3, dans lequel
la partie de commande (4) est configurée pour diminuer graduellement la fréquence de fonctionnement de la partie d'allumage (3) d'une fréquence limite supérieure de la plage de fréquence de balayage à une fréquence limite inférieure de celle-ci dans l'opération de démarrage (P1).

5. Dispositif d'allumage de lampe à décharge selon la revendication 4, dans lequel
la partie de commande (4) est configurée pour effectuer périodiquement un changement de la fréquence de fonctionnement de la partie d'allumage (3) plusieurs fois dans l'opération de démarrage (P1), et la partie de commande (4) change la fréquence de fonctionnement de la partie d'allumage (3) pour une fréquence inférieure à la fréquence limite supérieure de la plage de fréquence de balayage et supérieure à la fréquence limite inférieure de la plage de fréquence de balayage pendant un temps prédéterminé avant de changer la fréquence de fonctionnement de la partie d'allumage (3) pour la fréquence limite supérieure de la plage de fréquence de balayage après avoir changé la fréquence de fonctionnement de la partie d'allumage pour la fréquence limite inférieure de la plage de fréquence de balayage.

6. Dispositif d'allumage de lampe à décharge selon l'une quelconque des revendications 1 à 5, dans lequel
la partie de commande est configurée pour commander la partie d'allumage (3) de manière à inverser la polarité de la composante continue de la tension de sortie appliquée à la lampe à décharge (DL) au moins une fois durant l'opération de démarrage (P1).

7. Dispositif d'allumage de lampe à décharge selon la revendication 1 ou 2, dans lequel
la partie de commande (4) est configurée pour effectuer au moins une commutation durant l'opération de démarrage (P1) concernant celui des ensembles d'éléments de commutation (Q1, Q4 ; Q2, Q3) qui est défini comme étant le premier ensemble, et pour commander la partie d'allumage (3) de manière à effectuer une opération transitoire (P11) consistant à abaisser graduellement une tension entre les deux bornes du condensateur (C1) connecté en parallèle avec la lampe à décharge (DL) pendant un temps prédéterminé au moment de la commutation.

8. Dispositif d'allumage de lampe à décharge selon la revendication 7, dans lequel
l'opération transitoire (P11) est une opération où le premier ensemble (Q1, Q4) parmi les ensembles (Q1, Q4; Q2, Q3) d'éléments de commutation, chaque ensemble étant composé d'éléments de commutation positionnés diagonalement l'un par rapport à l'autre dans la partie d'allumage, et l'autre ensemble (Q2, Q3) sont alternativement et périodiquement débloqués et le rapport cyclique des éléments de commutation respectifs dans un ensemble défini comme étant le premier ensemble (Q1, Q4) jusqu'à juste avant est rendu supérieur au rapport cyclique des éléments de commutation respectifs dans un ensemble défini comme étant l'autre ensemble (Q2, Q3) jusqu'à juste avant.

9. Dispositif d'allumage de lampe à décharge selon la revendication 7, dans lequel
l'opération transitoire (P11) est une opération consistant à répéter périodiquement et cycliquement un état de déblocage des éléments de commutation respectifs dans un ensemble défini comme étant le premier ensemble (Q1, Q4) jusqu'à juste avant, respectivement, et de blocage des éléments de commutation respectifs dans un ensemble défini comme étant l'autre ensemble (Q2, Q3) jusqu'à juste avant, respectivement, un état de déblocage des éléments de commutation respectifs dans un ensemble défini comme étant l'autre ensemble (Q2, Q3) jusqu'à juste avant, respectivement, et de blocage des éléments de commutation respectifs dans un ensemble défini comme étant le premier ensemble (Q1, Q4) jusqu'à juste avant, respectivement, le rapport cyclique d'un élément de commutation (Q3) dans l'autre ensemble (Q2, Q3) étant inférieur aux rapports cycliques des trois éléments de commutation restants (Q1, Q2, Q4).

10. Dispositif d'allumage de lampe à décharge selon la revendication 7, dans lequel
l'opération transitoire (P11) est une opération consistant à bloquer les éléments de commutation respectifs dans un ensemble défini comme étant le premier ensemble (Q1, Q4) jusqu'à juste avant, respectivement, et à, dans un état débloqué de l'un (Q2) des éléments de commutation dans un ensemble défini comme étant l'autre ensemble (Q2, Q3) jusqu'à juste avant, débloquer et bloquer périodiquement l'autre (Q3) des éléments de commutation dans un ensemble défini comme étant l'autre ensemble (Q2, Q3) jusqu'à juste avant.

11. Dispositif d'allumage de lampe à décharge selon la revendication 6, dans lequel
la partie d'allumage (3) inclut des moyens de superposition de pointe (L2. C2) conçus pour superposer une composante du type pointe sur un courant de sortie appliqué à la lampe à décharge (DL) après allumage de la lampe à décharge (DL).

12. Appareil d'éclairage comprenant :
un dispositif d'allumage de lampe à décharge (DL) selon l'une quelconque des revendications 1 à 11 ; et
un corps principal d'appareil (51) contenant une lampe à décharge (DL) allumée par le dispositif d'allumage de lampe à décharge et le dispositif d'allumage de lampe à décharge, respectivement.
